# EUROPEAN PATENT APPLICATION

(11) **EP 1 288 283 A1**
(43) Date of publication of application: **05.03.2003**
(21) Application number: 01307505.6
(22) Date of filing: 04.09.2001
(51) Int. Cl.: C11D 3/39, C11D 3/00, C11D 3/28, C11D 3/20, A01N 65/00

(54) **Antimicrobial compositions**

(71) Applicant: UNILEVER PLC, London EC4P 4BQ (GB)
(72) Inventor: Thompson, Katherine Mary, Unilever Research Port, Wirral, Merseyside, CH63 3JW (GB); Thornthwaite, David William, Unilever Research, Wirral, Merseyside, CH63 3JW (GB)
(74) Representative: Griffiths, Helen Sarah

(57) **Abstract**

The invention provides a composition comprising a synergistically active antimicrobial mixture of a peroxygen source together with (i) a cationic activator compound which is capable of reacting in solution with the peroxygen source to form a peroxyimidic acid, and (ii) a carbonylic activator compound which is capable of reacting in solution with the peroxyimidic acid so formed to form a dioxirane.

The cationic activator compound is preferably a cationic nitrile, and the carbonylic activator compound is preferably a cyclic ketone.

The compositions are designed in particular for the hygienic cleaning of hard surfaces.

## Description

### Technical Field

The present invention relates to an antimicrobial cleaning composition which is designed in particular for the hygienic cleaning of hard surfaces. The composition comprises a synergistically active antimicrobial mixture of a peroxygen source together with cationic and carbonylic activator compounds.

### Background and Prior Art

Cleaning compositions designed for application to hard surfaces in the household, or in institutional or hospital environments, generally comprise one or more surfactants, and, optionally, one or more antimicrobial actives and/or solvents.

Hard surfaces found in the household, or in institutional or hospital environments, such as kitchen work surfaces and bathrooms, are often contaminated with bacteria and other microorganisms, which present a risk to human health, especially when they are present near food.

The biocidal activity of surfactants is, with a few notable exceptions, low and it is therefore commonplace to add a separate antimicrobial active to compositions.

Hydrogen peroxide is known as an environmentally friendly antimicrobial oxidant, but typically requires long contact times and/or high concentrations in order to be effective.

The present invention provides a synergistically active antimicrobial mixture of a peroxygen source together with cationic and carbonylic activator compounds. These activator compounds have been found to potentiate the antibacterial activity of peroxygen sources such as hydrogen peroxide. This allows a substantial reduction in the concentration of peroxygen source required to achieve good disinfectancy against the typical bacteria as found on hard surfaces in the household, so that effective hygiene performance can be obtained at much lower levels of hydrogen peroxide than would typically be used in a hygiene product such as an antimicrobial household cleaner.

### Summary of the Invention

The present invention provides a composition comprising a synergistically active antimicrobial mixture of a peroxygen source together with (i) a cationic activator compound which is capable of reacting in solution with the peroxygen source to form a peroxyimidic acid, and (ii) a carbonylic activator compound which is capable of reacting in solution with the peroxyimidic acid so formed to form a dioxirane.

### Detailed Description and Preferred Embodiments

### Cationic activator compound

Compositions of the invention comprise a cationic activator compound which is capable of reacting in solution with the peroxygen source to form a peroxyimidic acid.

The cationic activator compound is preferably a cationic nitrile.

By "cationic nitrile" is meant a molecule which contains the structural unit below:

-N⁺-CR₁R₂-CN X⁻

in which R₁ and R₂ are each independently selected from hydrogen or a substituent group containing at least one carbon atom, and X is a suitable counterion.

The organic groups attached to the positive nitrogen may for example be alkyl groups, or alternatively the positive nitrogen may be part of a heterocyclic or carbocyclic ring.

Suitable counterions X include any organic or inorganic anion. Examples are methylsulphate, sulphate, halide (such as chloride, bromide), nitrate, and those counterions described in EP 0 464 880 such as alkane and paraffin sulphonates, p-toluene sulphonate (tosylate), dodecyl benzene sulphonate, primary alcohol sulphates and ether sulphates, alkyl carboxylates and other surfactant anions.

Counterions of unquestionable peroxide stability, such as tosylate and methylsulphate, are particularly preferred.

Examples of suitable cationic nitriles include those materials described in EP 0 303 520 which are three particular classes of compound having 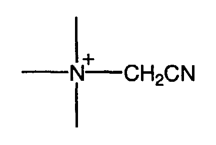 groups in the molecule. These are prepared by reacting a halogenated nitrile with either trialkylamine, pyridine or substituted pyridine, alkylene diamine or polyalkylenepolyamine respectively.

A preferred class of compounds of this type is trimethylammonium acetonitrile salts. An example is trimethylammonium acetonitrile methylsulphate.

The cationic nitriles as described in EP 0 303 520 may also be substituted at the α-carbon atom of the cationic nitrile group to improve their hygroscopic properties, as is described in EP 0 458 396.

Also suitable are the bacteriostatic "quats" described in US 4,874,785 which contain two long chain alkyl groups, one short chain alkyl group and a functional alkyl group which is substituted with nitrile.

Also suitable are cationic nitriles of the general formula:

(R₁) (R₂) (R₃)N⁺-C(R₄) (R₅) -CN X⁻

wherein R₁ is an alkyl group of 1-10 carbon atoms, a phenyl-substituted alkyl group with a total of 7-12 carbon atoms, or an alkyl-substituted phenyl group of 6-10 carbon atoms, R₂ and R₃ are independently methyl or ethyl groups, R₄ and R₅ are each independently selected from hydrogen or a substituent group containing at least one carbon atom and X⁻ is a counterion as is described above.

Preferably, if R₁ is an alkyl group it is linear and most preferably has 3-6 carbon atoms. If R₁ is a phenyl-substituted alkyl group it preferably has the structure R₄-C₆H₄-(CH₂)ₙ- wherein R₄ is hydrogen, methyl or ethyl, most preferably hydrogen, and n is 1-4. Preferably R₂ and R₃ are methyl.

N-alkyl morpholinium acetonitrile compounds represent a preferred class of cationic nitriles suitable for the invention. Examples are those which have been described as bleach activators for oxygen-containing bleaching agents in WO96/40661, WO98/23533 and WO98/23534.

A most preferred example is N-methyl-morpholinium acetonitrile methylsulphate.

In compositions of the invention, the total amount of cationic activator compound (such as cationic nitrile) suitably ranges from 0.01% to 10%, more preferably from 0.1% to 5%, most preferably from 0.15% to 4.0% by weight based on total weight of the composition.

### Carbonylic activator compound

Compositions of the invention comprise a carbonylic activator compound which is capable of reacting in solution with the peroxyimidic acid (formed by reaction of the cationic activator compound described above with the peroxygen source) to form a dioxirane.

By "carbonylic" is meant a compound containing at least one carbonyl group, such as an aldehyde or a ketone. Ketones are preferred.

The carbonylic activator compound is preferably non-cationic, (i.e. anionic or charge-neutral) to avoid electrostatic repulsion between it and the cationic activator compound described above.

A preferred class of carbonylic activator compounds are cyclic ketones, which may be unsubstituted, such as cyclohexanone, or may alternatively bear one or more substituents in or on the ring. 1-methyl-4-piperidone is particularly preferred.

Also suitable are acylpiperidones such as N-acetylpiperidone.

In compositions of the invention, the total amount of carbonylic activator compound suitably ranges from 0.01% to 10%, more preferably from 0.1% to 5%, most preferably from 0.15% to 4.0% by weight based on total weight of the composition.

### Peroxygen Source

The peroxygen source may be any peroxide or peroxide generating system known in the art such as dihydrocarbon peroxides, diacyl peroxides, hydrocarbon hydroperoxides, organic and inorganic peracids and persalts and in particular hydrogen peroxide.

Preferred peroxygen sources are hydrogen peroxide, peracetic acid, PAP and alkali metal or alkaline earth metal monoperoxosulphate salts.

Hydrogen peroxide is most preferred and may be incorporated *per* se into the composition, or may be generated *in situ* by use of a hydrogen peroxide precursor. Examples of suitable hydrogen peroxide precursors are compounds which produce hydrogen peroxide on dissolution in water, (such as sodium perborate monohydrate, sodium perborate tetrahydrate, sodium percarbonate and the urea-hydrogen peroxide addition compound percarbamide), and enzymatic hydrogen peroxide generating systems (such as peroxidases, oxidases and other oxido-reductase enzyme systems, in conjunction with their appropriate substrates).

Advantageously the cationic and carbonylic activators together potentiate the antibacterial activity of the peroxygen source. This allows effective hygiene performance to be obtained at much lower levels of active than would typically be used in a hygiene product such as an antimicrobial household cleaner.

The benefits of being able to formulate at reduced levels of active are particularly significant in the context of household cleaning. Such advantages include the reduction or elimination of potential skin or eye irritation associated with consumer usage of the formulation, and the reduction or elimination of formulation residues which could, for example, contaminate food.

The amount of hydrogen peroxide in compositions of the invention (or precursor thereof generating the equivalent amount of hydrogen peroxide), suitably ranges from 0.0001% to 5%, more preferably from 0.001 to 1.5%, most preferably from 0.003% to 0.6%, by weight based on total weight of the composition.

### Ingredient Ratios

The molar ratio of cationic activator compound (in total, if a mixture of cationic activator compounds is used) to carbonylic activator compound (in total, if a mixture of carbonylic activator compounds is used) to peroxygen source (such as hydrogen peroxide or precursor thereof generating the equivalent amount of hydrogen peroxide) typically ranges from 10:10:1 to 1:1000:1000, preferably from 5:5:1 to 1:100:100, most preferably about 1:1:1.

### pH

Aqueous ready-to-use compositions of the invention will generally have a pH between 6 and 12, more preferably between 7 and 11.5.

### Product Usage

Compositions according to the invention are designed in particular for the hygienic cleaning of hard surfaces. By "hard surfaces" is meant those surfaces which are typically found in the household, or in institutional or hospital environments, and which are prone to microbial contamination. Examples include bathroom fixtures, bathroom appliances (toilets, bidets, shower stalls, bathtubs and bathing appliances), wall and flooring surfaces and those surfaces associated with kitchen environments and other environments associated with food preparation.

### Product Form and Packaging

Compositions of the invention designed for the hygienic cleaning of surfaces may take any form suitable for hygiene products.

Liquid compositions according to the invention are typically aqueous compositions in which the principal ingredient is water, which is normally present at a level of at least 75%, preferably at least 90%, more preferably at least 95%, by weight based on total weight of the composition. The use of distilled or demineralised water is preferred, but not essential to the invention.

In liquid compositions according to the invention, it is preferred to store the cationic activator compound separately from the peroxygen source.

This could be achieved by providing them in respective separate containers. The consumer could then apply each to the surface to be treated, either sequentially or simultaneously. However, it is more convenient to package the composition in a dual-compartment container in which the cationic activator compound is stored in a separate compartment to the peroxygen source. In compositions where the peroxygen source is hydrogen peroxide then the carbonylic activator compound may be stored in either compartment of the dual-compartment container but is preferably stored together with the cationic activator compound. In compositions where the peroxygen source is a peracid then the carbonylic activator should be stored separately from the peracid. Such a dual-compartment container will include a delivery means which allows the cationic and carbonylic activator compounds and peroxygen source to be delivered to the surface to be treated so that they combine as they are exiting the delivery means and/or in mid-air as they are directed to the surface and/or on the surface itself.

A particularly preferred delivery means, especially for non-thickened systems, is a trigger spray head. In the case of a dual compartment system, this will preferably have two siphon tubes, respectively leading into each compartment and either a single nozzle with a mixing chamber or two separate nozzles substantially adjacent to each other. If desired, a dispensing nozzle or nozzles configured to promote foaming may be used.

For thickened systems a pouring dual compartment packaging form is generally preferred.

Alternatively, compositions of the invention may contain a peroxygen source precursor such as a hydrogen peroxide precursor which produces hydrogen peroxide on dissolution in water, in which case a solid product form can be used, such as a tablet.

### Other Ingredients

Compositions of the invention designed for the hygienic cleaning of surfaces may further contain any conventional surfactant for emulsification and cleaning purposes. The concentration of this surfactant material is generally in the range from 0 to 50% by weight based on total weight of the composition, but a maximum concentration of 20% by weight based on total weight of the composition is usually preferred. Suitable surfactants may be anionic surfactants, such as alkyl aryl sulfonates, alkyl sulfates and alkyl sulfonates, nonionic surfactants, such as ethylene oxide and/or propylene oxide condensation products with alcohols or alkylphenol, or mixtures thereof.

The composition according to the invention can contain other optional ingredients which aid in their cleaning performance and maintain the physical and chemical stability of the product.

Hydrotropes are useful optional components. These enable the cloud point of the composition to be raised without requiring the addition of anionic surfactants.

Suitable hydrotropes include alkali metal toluene sulphonates, urea, alkali metal xylene and cumene sulphonates, short chain (preferably C₁₋₅) alcohols, and glycols. Preferred amongst these hydrotropes are the sulphonates, particularly the cumene and toluene sulphonates.

Typical levels of hydrotrope range from 0 to 5% by weight based on total weight of the composition, for the sulphonates. Correspondingly higher levels of urea and alcohols are required. Hydrotropes are not required for dilute products.

Solvents may be present in the compositions of the invention.

Suitable solvents correspond to the general formula R₁-O-(EO)ₘ-(PO)ₙ-R₂, wherein R₁ and R₂ are independently C₂₋₆ alkyl or hydrogen, but not both hydrogen, m and n are independently 0-5, EO represents an ethyleneoxy group and PO represents a propyleneoxy group.

Suitable materials of this type include the C₁₋₄ alkyl ethers of alkylene glycols such as ethylene glycol, propylene glycol and oligomers thereof having 2 or 3 repeating units. Examples include monoethers such as ethylene glycol mono-n-butyl ether, ethylene glycol monomethyl ether, ethylene glycol monoethyl ether, ethylene glycol mono-n-hexyl ether, propylene glycol monomethyl ether, propylene glycol monoethyl ether, propylene glycol mono-n-butyl ether, isopropylene glycol monoethyl or monopropyl or monobutyl ether, diethylene glycol monoethyl or monopropyl or monobutyl ether, di- or tripropylene glycol monomethyl ether, di- or tripropylene glycol monoethyl ether, and mixtures thereof.

Typical levels of solvent range from 0 to 2% by weight based on total weight of the composition.

Compositions according to the invention can also contain, in addition to the ingredients already mentioned, other optional ingredients such as pH regulants, sunscreens, foam-control agents, colorants, viscosity modifying agents, freeze-thaw stabilisers, additional hygiene agents, perfumes and opacifiers.

The invention will now be illustrated by the following nonlimiting Examples, in which all percentages are by weight based on total weight, unless otherwise indicated.

### EXAMPLES

The bactericidal activities of various ternary combinations of hydrogen peroxide with representative cationic nitriles and ketones, compared with controls using the ingredient individually or in binary combinations, were tested using the European Suspension Test protocol (European standard EN1276). Biocidal test data against two representative bacteria, *E. coli* ATCC 11229 (Gram-negative) and *S. aureus ATCC 6538* (Gram-positive) are shown below in Tables 1 and 2.

**Table 1(a)**

| Bactericidal activity from combinations of N-methyl-morpholinium acetonitrile methylsulphate, cyclohexanone and hydrogen peroxide (5 minutes contact time) in unbuffered systems against *S. aureus:* | | | |
|---|---|---|---|
| | | **Mean log reduction in cell numbers**^{**(1)**} **(from log-7 cell suspension)** | |
| **Formulation** | **pH** | No BSA⁽²⁾ | 0.3% BSA |
| 0.1% hydrogen peroxide | 11.0 | 0 | 0 |
| 0.68% N-methyl-morpholinium acetonitrile methylsulphate | 11.0 | 0 | 0 |
| 0.3% cyclohexanone | 11.0 | 0 | 0 |
| 0.1% hydrogen peroxide + 0.68% N-methyl-morpholinium acetonitrile methylsulphate | 11.0 | 3.0 | 0 |
| 0.1% hydrogen peroxide + 0.3% cyclohexanone | 11.0 | 0 | 0 |
| **0.1% hydrogen peroxide + 0.68% N- methyl-morpholinium acetonitrile methylsulphate + 0.3% cyclohexanone** | 11.0 | **4.8** | **1.5** |
| | | | |
| 0.1% hydrogen peroxide | 9.0 | 0 | 0 |
| 0.68% N-methyl-morpholinium acetonitrile methylsulphate | 9.0 | 0 | 0 |
| 0.3% cyclohexanone | 9.0 | 0 | 0 |
| 0.1% hydrogen peroxide + 0.68% N-methyl-morpholinium acetonitrile methylsulphate | 9.0 | 4.5 | 1.5 |
| 0.1% hydrogen peroxide + 0.3% cyclohexanone | 9.0 | 0 | 0 |
| **0.1% hydrogen peroxide + 0.68% N- methylmorpholinium acetonitrile methylsulphate + 0.3% cyclohexanone** | 9.0 | **5.0** | **3.3** |
| | | | |
| 0.1% hydrogen peroxide | 7.0 | 0 | - |
| 0.68% N-methylmorpholinium acetonitrile methylsulphate | 7.0 | 0 | - |
| 0.34% 1-methyl-4-piperidone | 7.0 | 0 | - |
| 0.1% hydrogen peroxide + 0.68% N-methyl-morpholinium acetonitrile methylsulphate | 7.0 | 0 | - |
| 0.1% hydrogen peroxide + 0.34% 1-methyl-4-piperidone | 7.0 | 0 | - |
| **0.1% hydrogen peroxide + 0.68% N- methylmorpholinium acetonitrile methylsulphate + 0.34% 1-methyl-4- piperidone** | 7.0 | **2.3** | - |

| | | | |
|---|---|---|---|
| ⁽¹⁾ 4 replicate experiments | | | |
| ⁽²⁾ BSA - bovine serum albumin (protein soil) | | | |

**Table 1(b) :**

| Bactericidal activity from combinations of N-methyl-morpholinium acetonitrile methylsulphate, ketone (1-methyl-4-piperidone) and hydrogen peroxide (5 minutes contact time) in unbuffered systems against *E. coli* : | | | |
|---|---|---|---|
| | | **Mean log reduction in cell numbers**^{**(1)**} **(from log-7 cell suspension)** | |
| **Formulation** | **pH** | No BSA⁽²⁾ | 0.3% BSA |
| 0.1% hydrogen peroxide | 7 | 0 | 0 |
| 0.68% N-methylmorpholinium acetonitrile methylsulphate | 7 | 0 | 0 |
| 0.34% 1-methyl-4-piperidone | 7 | 0 | 0 |
| 0.1% hydrogen peroxide + 0.68% N-methylmorpholinium acetonitrile methylsulphate | 7 | 4.3 | 1.8 |
| 0.1% hydrogen peroxide + 0.34% 1-methyl-4-piperidone | 7 | 0 | 0 |
| **0.1% hydrogen peroxide + 0.68% N-methylmorpholinium acetonitrile methylsulphate + 0.34% 1-methyl-4-piperidone** | 7 | **5.0** | **5.0** |

| | | | |
|---|---|---|---|
| ⁽¹⁾ 4 replicate experiments | | | |
| ⁽²⁾ BSA - bovine serum albumin (protein soil) | | | |

**Table 2(a) :**

| Bactericidal activity from combinations of trimethylammonium acetonitrile methylsulphate, cyclohexanone and hydrogen peroxide (5 minutes contact time) in unbuffered systems against *S. aureus:* | | |
|---|---|---|
| **Formulation** | | **pH** |
| 0.1% hydrogen peroxide | 7 | 0 |
| 0.59% trimethylammonium acetonitrile methylsulphate | 7 | 0 |
| 0.3% cyclohexanone | 7 | 0 |
| 0.1% hydrogen peroxide + 0.59% trimethylammonium acetonitrile methylsulphate | 7 | 0.3 |
| 0.1% hydrogen peroxide + 0.3% cyclohexanone | 7 | 0 |
| **0.1% hydrogen peroxide + 0. 59% trimethylammonium acetonitrile methylsulphate + 0.3% cyclohexanone** | 7 | **2.5** |
| | | |
| 0.1% hydrogen peroxide | 9 | 0 |
| 0.59% trimethylammonium acetonitrile methylsulphate | 9 | 0 |
| 0.3% cyclohexanone | 9 | 0 |
| 0.1% hydrogen peroxide + 0.59% trimethylammonium acetonitrile methylsulphate | 9 | 0 |
| 0.1% hydrogen peroxide + 0.3% cyclohexanone | 9 | 0 |
| **0.1% hydrogen peroxide + 0.59% trimethylammonium acetonitrile methylsulphate + 0.3% cyclohexanone** | 9 | **3.3** |
| | | |
| 0.1% hydrogen peroxide | 11 | 0 |
| 0.59% trimethylammonium acetonitrile methylsulphate | 11 | 0 |
| 0.3% cyclohexanone | 11 | 0 |
| 0.1% hydrogen peroxide + 0.59% trimethylammonium acetonitrile methylsulphate | 11 | 0 |
| 0.1% hydrogen peroxide + 0.3% cyclohexanone | 11 | 0 |
| **0.1% hydrogen peroxide + 0.59% trimethylammonium acetonitrile methylsulphate + 0.3% cyclohexanone** | 11 | **3.3** |
| ⁽¹⁾ 4 replicate experiments, no protein soil | | |

**Table 2(b) :**

| Bactericidal activity from combinations of trimethylammonium acetonitrile methylsulphate, ketone (cyclohexanone or 1-methyl-4-piperidone) and hydrogen peroxide (5 minutes contact time) in unbuffered systems against *E. coli*: | | | |
|---|---|---|---|
| **Formulation** | | **pH** | |
| | | No BSA⁽²⁾ | 0.3% BSA |
| 0.1% hydrogen peroxide | 11 | 0 | 0 |
| 0.59% trimethylammonium acetonitrile methylsulphate | 11 | 0 | 0 |
| 0.3% cyclohexanone | 11 | 0 | 0 |
| 0.1% hydrogen peroxide + 0.59% trimethylammonium acetonitrile methylsulphate | 11 | 2.5 | 0.3 |
| 0.1% hydrogen peroxide + 0.3% cyclohexanone | 11 | 0 | 0 |
| **0.1% hydrogen peroxide + 0. 59% trimethylammonium acetonitrile methylsulphate + 0.3% cyclohexanone** | 11 | **4.0** | **3.8** |
| | | | |
| 0.1% hydrogen peroxide | 7 | 0 | 0 |
| 0.59% trimethylammonium acetonitrile methylsulphate | 7 | 0 | 0 |
| 0.34% 1-methyl-4-piperidone | 7 | 0 | 0 |
| 0.1% hydrogen peroxide + 0.59% trimethylammonium acetonitrile methylsulphate | 7 | 1.6 | 1.0 |
| 0.1% hydrogen peroxide + 0.34% 1-methyl-4-piperidone | 7 | 0 | 0 |
| **0.1% hydrogen peroxide + 0. 59% trimethylammonium acetonitrile methylsulphate + 0.34% 1-methyl-4-piperidone** | 7 | **4.3** | **3.5** |

| | | | |
|---|---|---|---|
| ⁽¹⁾ 4 replicate experiments ⁽²⁾ BSA - bovine serum albumin (protein soil) | | | |

The data in Tables 1 and 2 show that the ternary cationic nitrile/ketone/hydrogen peroxide systems show greater bactericidal activity than the additive combinations of any of the single or binary components. The three component systems are particularly useful in helping to maintain bactericidal performance in the presence of soil, which otherwise has a negative impact on the performance of the cationic nitrile/hydrogen peroxide binary mixtures.

## Claims

1. A composition comprising a synergistically active antimicrobial mixture of a peroxygen source together with (i) a cationic activator compound which is capable of reacting in solution with the peroxygen source to form a peroxyimidic acid, and (ii) a carbonylic activator compound which is capable of reacting in solution with the peroxyimidic acid so formed to form a dioxirane.

2. A composition according to claim 1, in which the cationic activator compound is a cationic nitrile.

3. A composition according to claim 2, in which the cationic nitrile is a N-methyl-morpholinium acetonitrile salt or a trimethylammonium acetonitrile salt.

4. A composition according to any one of claims 1 to 3, in which the carbonylic activator compound is a charge-neutral, non-volatile cyclic ketone.

5. A composition according to claim 4 , in which the cyclic ketone is 1-methyl-4-piperidone or cyclohexanone.

6. A composition according to any one of claims 1 to 5, in which the peroxygen source is hydrogen peroxide.

7. A composition according to any one of claims 1 to 6, in carbonylic activator compound to peroxygen source ranges from 10:10:1 to 1:1000:1000, preferably from 5:5:1 to 1:100:100 most preferably about 1:1:1.

8. A composition according to any one of claims 1 to 7, which has a pH between 6 and 12, preferably from 7.0 to 11.5.

9. A hygienic cleaning composition according to any one of claims 1 to 8, in which the cationic activator compound and peroxygen source are respectively packaged in separate compartments of a dual compartment dispenser and mixed on dispensation.
